(19) Europäisches Patentamt / European Patent Office / Office européen des brevets

(11) **EP 4 290 910 A1**

(12) **EUROPEAN PATENT APPLICATION**
published in accordance with Art. 153(4) EPC

(43) Date of publication:
**13.12.2023 Bulletin 2023/50**

(21) Application number: **21924740.0**

(22) Date of filing: **20.08.2021**

(51) International Patent Classification (IPC):
**H04W 16/28** (2009.01)     **H04W 88/02** (2009.01)

(52) Cooperative Patent Classification (CPC):
**H04W 16/28; H04W 88/02**

(86) International application number:
**PCT/JP2021/030622**

(87) International publication number:
**WO 2022/168352 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.02.2021   JP 2021015669**

(71) Applicant: **Panasonic Holdings Corporation
Osaka 571-8501 (JP)**

(72) Inventor: **ASANUMA, Tsutomu
Kadoma-shi, Osaka 571-0057 (JP)**

(74) Representative: **Eisenführ Speiser
Patentanwälte Rechtsanwälte PartGmbB
Postfach 31 02 60
80102 München (DE)**

(54) **COMMUNICATION SYSTEM, COMMUNICATION DEVICE, AND COMMUNICATION METHOD**

(57)    The present invention reduces the impact of overreach interference when overreach interference occurs at the time of installation of communication devices. Provided is a communication system for performing wireless communication between a first communication device and a second communication device, wherein the first communication device performs measurement during a fixed period of an index indicating at least one of the modulation method and the coding rate used in wireless communication with the second communication device, calculates the amount of variation in the index in the fixed period on the basis of the measured indices, and determines the directivity of an antenna for performing wireless communication with the second communication device on the basis of the amount of variation in the index.

FIG. 1

**EP 4 290 910 A1**

**Description**

TECHNICAL FIELD

The present disclosure relates to a communication system, a communication device, and a communication method.

BACKGROUND ART

A backhaul that connects a base station and a core network may be implemented by connecting a plurality of fixedly installed communication devices in multiple stages in a wired or wireless manner. In a case where wireless communication between any two communication devices and wireless communication between two other communication devices use the same frequency, depending on a positional relationship of the communication devices, overreach interference may occur, and communication quality may be deteriorated (Patent Literature 1).

CITATION LIST

PATENT LITERATURE

Patent Literature 1: JP2002-10340A

SUMMARY OF INVENTION

TECHNICAL PROBLEM

As described above, the overreach interference deteriorates the communication quality between the communication devices. Therefore, when overreach interference occurs at the time of installation of a communication device, it is preferable to reduce an impact of the overreach interference.

An object of the present disclosure is to provide a technique for reducing an impact of overreach interference when the overreach interference occurs at the time of installation of a communication device.

SOLUTION TO PROBLEM

A communication system according to an aspect of the present disclosure is a communication system for performing wireless communication between a first communication device and a second communication device, in which the first communication device is configured to measure, for a certain period, an index indicating at least one of a modulation method and a coding rate used for wireless communication with the second communication device, calculate a variation amount of the index in the certain period based on the measured index, and determine, based on the variation amount of the index, a directivity of an antenna configured to perform the wireless communication with the second communication device.

A communication device according to an aspect of the present disclosure is a communication device for performing wireless communication with a partner communication device, the communication device including: an antenna configured to perform wireless communication with the partner communication device; and a processor configured to measure, for a certain period, an index indicating at least one of a modulation method and a coding rate used for the wireless communication with the partner communication device, calculate a variation amount of the index in the certain period based on the measured index, and determine a directivity of the antenna based on the variation amount of the index.

A communication method according to an aspect of the present disclosure is a communication method for performing wireless communication between a first communication device and a second communication device, the communication method including: by the first communication device, measuring, for a certain period, an index indicating at least one of a modulation method and a coding rate used for wireless communication with the second communication device; calculating a variation amount of the index in the certain period based on the measured index; and determining, based on the variation amount of the index, a directivity of an antenna that performs the wireless communication with the first communication device.

These comprehensive or specific aspects may be implemented by a system, a device, a method, an integrated circuit, a computer program, or a recording medium, or any combination of the system, the device, the method, the integrated circuit, the computer program, and the recording medium.

ADVANTAGEOUS EFFECTS OF INVENTION

According to the present disclosure, when overreach interference occurs at the time of installation of a communication device, it is possible to reduce an impact of the overreach interference.

BRIEF DESCRIPTION OF DRAWINGS

Fig. 1 is a diagram showing an example of a configuration of a communication system according to an embodiment;
Fig. 2 is a block diagram showing a configuration example of a communication device according to the present embodiment;
Fig. 3A is a diagram showing a case where a reference sector is selected as a communication sector in an antenna according to the present embodiment;
Fig. 3B is a diagram showing a case where a left sector is selected as the communication sector in the antenna according to the present embodiment;
Fig. 3C is a diagram showing a case where a right sector is selected as the communication sector in the antenna according to the present embodiment;
Fig. 4 is a diagram showing an example of a modulation coding scheme (MCS) expected value table according to the present embodiment;
Fig. 5 is a flowchart showing an example of processing performed by the communication device; and
Fig. 6 is a flowchart showing an example of sector change processing.

DESCRIPTION OF EMBODIMENTS

Hereinafter, an embodiment of the present disclosure will be described in detail with reference to the drawings as appropriate. However, the unnecessarily detailed description may be omitted. For example, the detailed description of already well-known matters and the repeated description of substantially the same configuration may be omitted. This is to avoid the following description from being unnecessarily redundant and facilitate understanding by those skilled in the art. The accompanying drawings and the following description are provided for those skilled in the art to fully understand the present disclosure, and are not intended to limit the subject matter described in the claims.

(Embodiment)

<Configuration of Communication System>

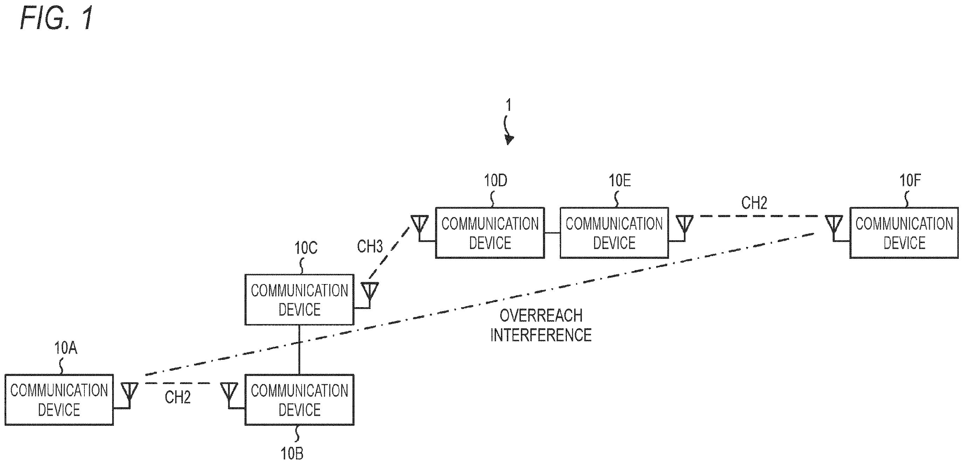

Fig. 1 is a diagram showing an example of a configuration of a communication system 1 according to an embodiment. In the following description, when communication devices are distinguished from each other, reference numerals with alphabetical letters added after a number, such as communication devices 10A and 10B, are used, and when the communication devices are not distinguished, a reference numeral with only a number, such as a communication device 10, is used.
As shown in Fig. 1, the communication system 1 may constitute a backhaul system by connecting a plurality of communication devices 10 in multiple stages by wired communication or wireless communication. The backhaul refers to a network configuration formed by communication devices on a one-to-one basis. The backhaul system refers to a system formed by a large number of backhauls.
In Fig. 1, it is assumed that communication devices 10A, 10B, 10C, and 10D are already installed. The communication device 10A and the communication device 10B are connected by wireless communication, the communication device 10B and the communication device 10C are connected by wired communication, and the communication device 10C and the communication device 10D are connected by wireless communication. Accordingly, a backhaul system capable of performing bi-directional data communication is formed between the communication device 10A and the communication device 10D.
A wireless signal in a 60 GHz band, which is an example of a millimeter wave band, may be used for wireless communication. Accordingly, high-speed wireless communication is possible. However, a frequency band used for the wireless communication is not limited to the millimeter wave band, and may be any frequency band. When the 60 GHz band is used, the two communication devices 10 may transmit and receive the wireless signal by selecting any one of channels CH1 to CH4. For example, as shown in Fig. 1, the communication device 10A and the communication device 10B transmit and receive a wireless signal by selecting CH2, and the communication device 10C and the communication device 10D transmit and receive a wireless signal by selecting CH3. The wireless signal between the communication device 10A and the communication device 10B and the wireless signal between the communication device 10C and the communication device 10D are on different channels, and thus do not interfere with each other. In the present disclosure, the channel is a term for distinguishing bands used for wireless communication.

Here, consider a case where the backhaul system is extended by further installing a communication device 10E and a communication device 10F, connecting the communication device 10E and the communication device 10D by wired communication, and connecting the communication device 10F and the communication device 10E by wireless communication.

In this case, the communication device 10E and the communication device 10F select a channel different from CH3 used by the adjacent communication devices 10C and 10D among the channels CH1 to CH4. When the 60 GHz band is used, CH1 and CH4 may not satisfy transmission spurious, and the communication device 10E and the communication device 10F may select CH2. However, when CH2 is selected, the communication device 10F may receive interference (that is, overreach interference) of the wireless signal transmitted to the communication device 10B by the communication device 10A using the same CH2. The overreach interference deteriorates reception quality of a wireless signal transmitted from the communication device 10E in the communication device 10F.

In the present embodiment, a technique will be described in which it is determined whether overreach interference occurs when the communication device 10F is installed, and when overreach interference occurs, an antenna 11 of the communication device 10F is controlled to reduce an impact of the overreach interference.

<Configuration of Communication Device>

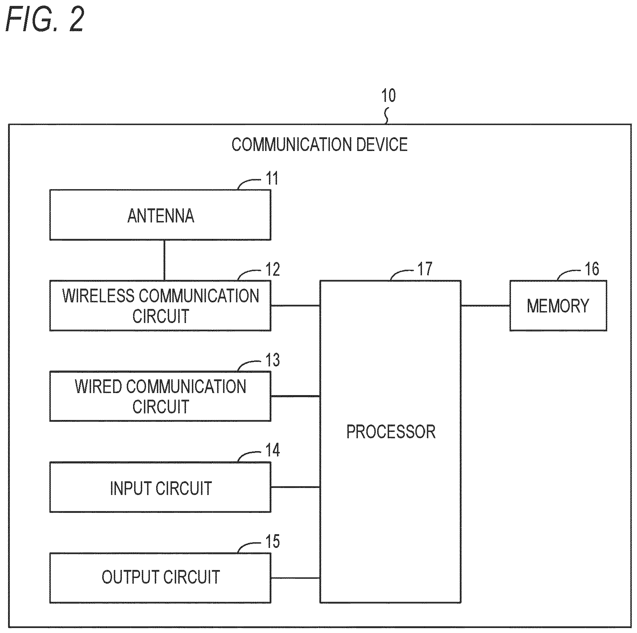

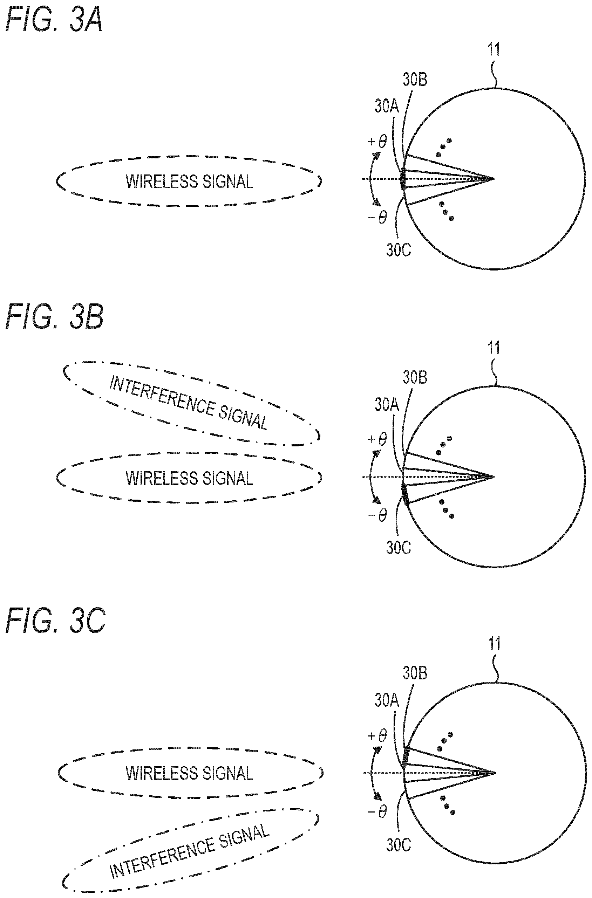

Fig. 2 is a block diagram showing a configuration example of the communication device 10 according to the present embodiment. Fig. 3A is a diagram showing a case where a reference sector is selected as a communication sector in the antenna 11 according to the present embodiment. Fig. 3B is a diagram showing a case where a left sector is selected as the communication sector in the antenna 11 according to the present embodiment. Fig. 3C is a diagram showing a case where a right sector is selected as the communication sector in the antenna 11 according to the present embodiment.

The communication device 10 includes the antenna 11, a wireless communication circuit 12, a wired communication circuit 13, an input circuit 14, an output circuit 15, a memory 16, and a processor 17. However, the communication device may not include at least one of the wired communication circuit 13, the input circuit 14, and the output circuit 15.

The antenna 11 transmits and receives a wireless signal. As shown in Fig. 3A, the antenna 11 may be a sector antenna capable of performing communication by selectively using a plurality of sectors having different directivity. In the present embodiment, as shown in Fig. 3A, an angle $\theta$ in a predetermined direction is set to 0 degrees, and a sector with the angle $\theta$ = 0 degrees is referred to as a reference sector 30A. In addition, a sector in a direction in which the angle $\theta$ is plus is referred to as a right sector 30B, and a sector in a direction in which the angle $\theta$ is minus is referred to as a left sector 30C. The right sector 30B may be selected in units of plus 5 degrees, and the left sector 30C may be selected in units of minus 5 degrees. The antenna 11 may transmit and/or receive the wireless signal in a selected sector. Hereinafter, a sector selected for transmitting and/or receiving the wireless signal is referred to as a communication sector.

The antenna 11 may change an orientation (an angle) of a directivity thereof by beam forming. In this case, an orientation of a directivity of the beam forming may correspond to the selected sector. That is, selection of the communication sector may be read as a change in the directivity of the antenna 11 by the beam forming.

The wireless signal received by the antenna 11 is input to the wireless communication circuit 12. The wireless communication circuit 12 demodulates the input wireless signal and outputs the demodulated wireless signal to the processor 17. In addition, the wireless communication circuit 12 modulates data input from the processor 17 to generate a wireless signal, and outputs the wireless signal to the antenna 11.

The wired communication circuit 13 transmits and receives a signal to and from another communication device 10 connected by wired communication. For example, an optical fiber cable, an Ethernet cable, or the like is connected to the wired communication circuit 13.

An input device is connected to the input circuit 14. Examples of the input device include a keyboard, a mouse, a touch pad, and a microphone. A user can operate the communication device 10 through the input device.

An output device is connected to the output circuit 15. Examples of the output device include a display and a speaker. The user can check a processing result, an operation situation, and the like of the communication device 10 through the output device.

The memory 16 stores data, programs, and the like for implementing functions of the communication device 10 according to the present embodiment. The memory 16 may be implemented by a read-only memory (ROM), a random access memory (RAM), a non-volatile storage medium, or a combination thereof.

The processor 17 implements the functions of the communication device 10 according to the present embodiment in cooperation with at least one of the antenna 11, the wireless communication circuit 12, the wired communication circuit 13, the input circuit 14, the output circuit 15, and the memory 16. For example, the processor 17 reads a program from the memory 16 and executes the program, thereby implementing processing performed by the communication device 10 to be described later. Therefore, in the present embodiment, processing mainly performed by the communication device 10 can be read as processing mainly performed by the processor 17. The processor 17 may be read as other terms such as a central processing unit (CPU), a controller, an arithmetic circuit, and an integrated circuit.

Next, the processing performed by the communication device 10 according to the present embodiment will be described.

<Detection of Inter-Device Distance>

The processor 17 of the communication device 10F performs test communication related to wireless communication with the communication device 10E, and detects a distance between the communication device 10E and the communication device 10F (hereinafter, referred to as an inter-device distance). For example, the processor 17 of the communication device 10F detects the inter-device distance by a time of arrival (TOA) method using an arrival time of a wireless signal with the communication device 10E. However, the inter-device distance is not limited to be detected by the TOA method, and may be detected by other known methods. That is, the inter-device distance may be provided from an external device as long as the inter-device distance can be acquired in the communication device 10F.

<Specification of MCS Expected Value>

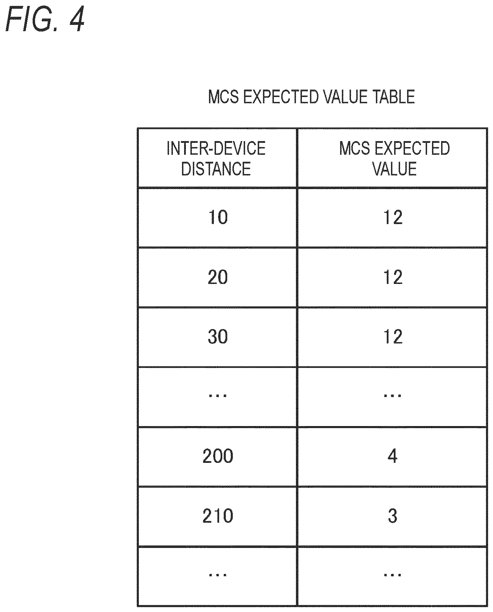

Fig. 4 is a diagram showing an example of an MCS expected value table according to the present embodiment.

As shown in Fig. 4, the memory 16 stores in advance the MCS expected value table, which is a table in which a distance between two communication devices 10 (hereinafter, referred to as an inter-device distance) and an MCS value expected to be selected in the inter-device distance (hereinafter, referred to as an MCS expected value) are associated with each other.

The MCS value is an index indicating a modulation method and a coding rate used for wireless communication. A correspondence relationship between the MCS value, the modulation method, and the coding rate may be determined in advance according to specifications. The MCS value may be read as an MCS index. Examples of the modulation method include QPSK, 16 QAM, 64 QAM, and 256 QAM.

Generally, the larger the MCS value, the higher the spectral efficiency. However, the larger the MCS value, the greater an impact of a distance (attenuation), noise, and/or interference, or the like in a channel. Therefore, the communication device appropriately selects an appropriate MCS value according to a situation such as a distance (attenuation), noise, and/or interference in the channel. Accordingly, the communication device 10 attempts to optimize data transmission efficiency of the channel. In the present embodiment, an example of reducing the overreach interference using the MCS value is shown, but in the present disclosure, an index indicating at least one of the modulation method and coding rate may be used instead of the MCS value.

When the inter-device distance is relatively long, the data transmission efficiency may be increased by selecting an MCS value smaller than an MCS value selected when the inter-device distance is relatively short. As described above, from a viewpoint of the data transmission efficiency, an MCS value appropriate for the inter-device distance may be present. That is, the MCS expected value corresponding to the inter-device distance may be an MCS value that is to be selected by two communication devices 10 installed apart by the inter-device distance when other impacts of noise and/or interference and the like are not taken into consideration.

The processor 17 of the communication device 10F specifies, by referring to the MCS expected value table, the MCS expected value corresponding to the inter-device distance detected as described above.

<Calculation of MCS Variation Amount>

The processor 17 of the communication device 10F measures, for a certain period, an MCS value included in a wireless signal transmitted from the communication device 10E. The communication device 10E may determine the MCS value by a known method according to a channel situation with the communication device 10F.

The processor 17 calculates a variation amount of MCS value (hereinafter, referred to as an MCS variation amount) based on a plurality of MCS values measured for a certain period. The MCS variation amount is a value indicating a magnitude of fluctuation of the MCS value in a certain period. The MCS variation amount may be calculated, for example, by any one of the following (A1), (A2), or (A3).

(A1) The MCS variation amount may be a deviation of a plurality of MCS values measured in a certain period. For example, assuming that each MCS value measured in a certain period is $x_i$, the number of MCS values measured in the certain period is n, and the MCS expected value corresponding to the inter-device distance specified above is $\mu$, a deviation $\sigma$ (where $\sigma$ is a positive value) of the MCS values may be calculated by the following equation 1. In this case, the communication device 10F may set the calculated deviation σ of the MCS values as the MCS variation amount.
[Math. 1]

$$\sigma^2 = \frac{1}{n}\sum_{i=1}^{n}(x_i - \mu)^2 \quad \text{--- (equation 1)}$$

(A2) The MCS variation amount may be a difference between a maximum MCS value and a minimum MCS value among MCS values measured in a certain period. For example, when the maximum MCS value is "9" and the minimum MCS value is "2" in a certain period, the difference between "9" and "2" is "6". In this case, the communication device 10F may set the calculated difference "6" as the MCS variation amount.

(A3) The MCS variation amount may be a value obtained by dividing a time length of a certain period by a longest period in which MCS values are continuously the same. For example, when the time length of the certain period is 60 seconds and the longest period in which the MCS values are continuously the same is 10 seconds, the value obtained by dividing "60" by "10" is "6". In this case, the communication device 10F may set the calculated "6" as the MCS variation amount.

That is, the larger the value of the MCS variation amount, the larger the fluctuation of the MCS value, and the smaller the value, the smaller the fluctuation of the MCS value.

<Determination of Overreach Interference>

The processor 17 of the communication device 10F determines, based on the MCS variation amount, whether overreach interference occurs. For example, the processor 17 determines that the overreach interference occurs when the MCS variation amount is equal to or greater than a predetermined threshold value, and determines that the overreach interference does not occur when the MCS variation amount is less than the predetermined threshold value. Threshold values for the determination may be different for each of the above (A1), (A2), and (A3).

As described above, the communication device 10E selects an appropriate MCS value according to a channel situation. For example, when the communication device 10A shown in Fig. 1 transmits a wireless signal, the wireless signal interferes with the communication device 10F, and thus the communication device 10E may decrease the MCS value. When the communication device 10A does not transmit a wireless signal, the wireless signal does not interfere with the communication device 10F, and thus the communication device 10E may increase the MCS value. As described above, when the overreach interference occurs, the MCS value of the communication device 10E may fluctuate according to a transmission situation of the wireless transmission in the communication device 10A. Therefore, the communication device 10F can determine whether the overreach interference occurs by the above determination processing.

<Selection of Sector of Antenna>

When it is determined that the overreach interference does not occur, the processor 17 of the communication device 10F may not change the sector (the communication sector) for transmitting and/or receiving the wireless signal in the antenna 11. For example, in a case where the reference sector 30A is selected as the communication sector, when it is determined that the overreach interference does not occur, the processor 17 of the communication device 10F keeps the communication sector as the reference sector 30A.

When it is determined that the overreach interference occurs, the processor 17 may estimate a direction (an angle) in which the communication device 10 which is a transmission source of a wireless signal causing the overreach interference is present. For example, the processor 17 measures whether the MCS variation amount increases when the communication sector is changed to the right sector 30B or the left sector 30C. A changeable range of the angle θ of the right sector 30B may be 0 degrees to +30 degrees. A changeable range of the angle θ of the left sector 30C may be 0 degrees to -30 degrees.

When an MCS variation amount in a case of changing to the right sector 30B (hereinafter, referred to as an MCS variation amount of the right sector 30B) is greater than an MCS variation amount in a case of changing to the left sector 30C (hereinafter, referred to as an MCS variation amount of the left sector 30C), as shown in Fig. 3B, when viewed from the communication device 10F, the direction of the communication device 10 which is the transmission source of the wireless signal causing the overreach interference is estimated to be a direction (an angle) of the right sector 30B. In this case, the processor 17 may change the communication sector to the left sector 30C. For example, the processor 17 changes the communication sector to the left sector 30C of -10 degrees.

When the MCS variation amount of the left sector 30C is greater than the MCS variation amount of the right sector 30B, as shown in Fig. 3C, when viewed from the communication device 10F, the direction of the communication device 10 which is the transmission source of the wireless signal causing the overreach interference is estimated to be a direction (an angle) of the left sector 30C. In this case, the processor 17 may change the communication sector to the right sector 30B. For example, the processor 17 changes the communication sector to the right sector 30B of +10 degrees.

By changing the communication sector to the left sector 30C or the right sector 30B as described above, a signal to interference ratio (SIR) between a wireless signal (that is, a desired signal) received from the communication device 10E and an interference signal is reduced in the antenna 11 of the communication device 10F. Therefore, communication quality of the antenna 11 of the communication device 10F is improved.

<Processing Performed by Communication Device>

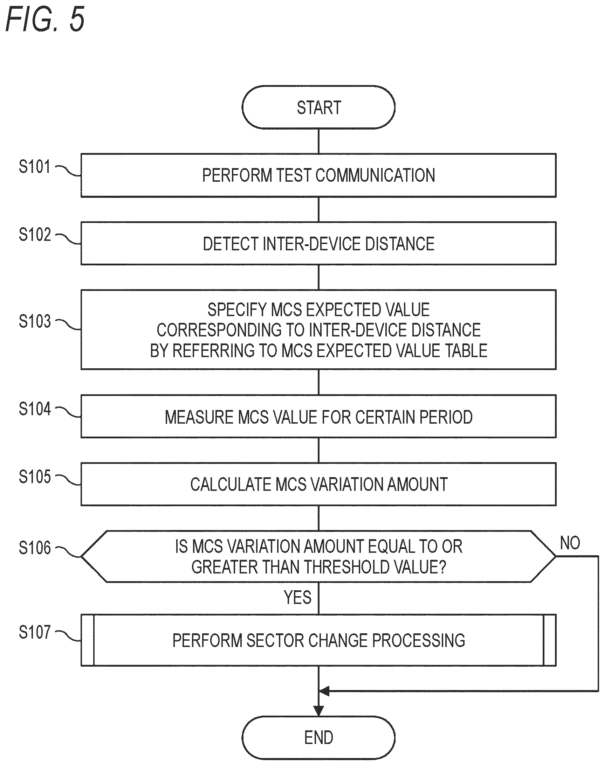

Fig. 5 is a flowchart showing an example of processing performed by the communication device 10F.

In S101, the communication device 10F performs test communication with the communication device 10E to detect an inter-device distance.

In S102, the communication device 10F detects the inter-device distance with the communication device 10E based on a test communication result in S101.

In S103, the communication device 10F specifies, by referring to the MCS expected value table, an MCS expected value corresponding to the inter-device distance detected in S102.

In S104, the communication device 10F measures an MCS value in the reference sector 30A for a certain period. For example, the communication device 10F receives the MCS value transmitted from the communication device 10E for a certain period, and records the MCS value received for the certain period in the memory 16. At this time, the communication device 10F may display a difference between the measured MCS value and the MCS expected value specified in S103 on a display in real time through the output circuit 15. Accordingly, the user can check in real time whether quality of wireless communication between the communication device 10F and the communication device 10E is poor as compared with a case of a normal inter-device distance.

In S105, the communication device 10F calculates, using each MCS value measured in S104 for a certain period, an MCS variation amount in the certain period. For example, the communication device 10F calculates the MCS variation amount by any one of the above (A1), (A2), or (A3) method.

In S106, the communication device 10F determines whether the MCS variation amount calculated in S105 is equal to or greater than a predetermined threshold value.

When it is determined that the MCS variation amount is less than the predetermined threshold value (S106: NO), the communication device 10F ends the present processing. This is because, in this case, the communication device 10F can receive a wireless signal transmitted from the communication device 10E with sufficient quality in a current communication sector (for example, the reference sector 30A).

When it is determined that the MCS variation amount is equal to or greater than the predetermined threshold value (S106: YES), the communication device 10F proceeds to processing of S107.

In S107, the communication device 10F performs sector change processing. This is because, in this case, in the current communication sector (for example, the reference sector 30A), an impact of overreach interference is large, and the wireless signal transmitted from the communication device 10E cannot be received with the sufficient quality.

Then, the communication device 10F ends the present processing.

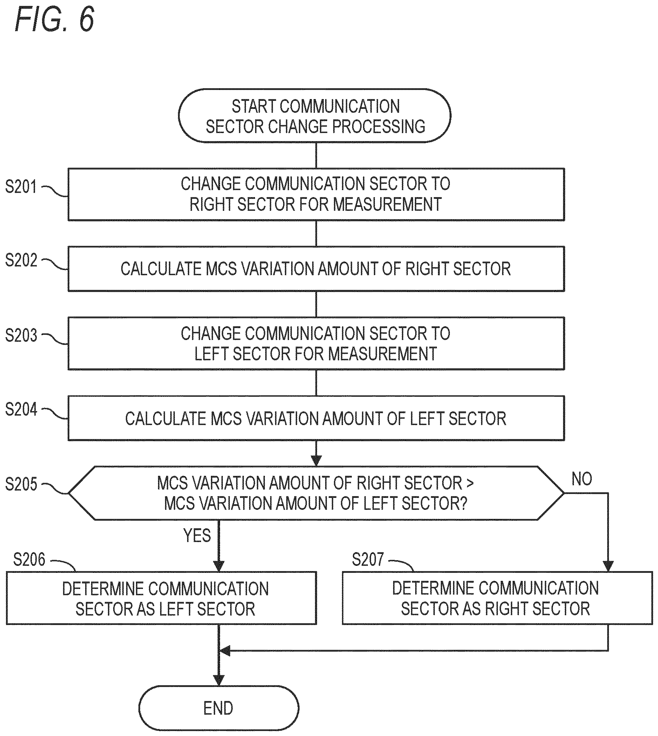

Fig. 6 is a flowchart showing an example of the sector change processing. The present processing corresponds to details of the processing of S107 in Fig. 5.

In S201, the communication device 10F changes a communication sector to the right sector 30B for measurement.

In S202, the communication device 10F calculates an MCS variation amount of the right sector 30B by the same processing as S104 to S105 in Fig. 5. The communication device 10F may change the communication sector to the right sector 30B by a predetermined angle and calculate an MCS variation amount of the right sector 30B at each angle.

In S203, the communication device 10F changes the communication sector to the left sector 30C for measurement.

In S204, the communication device 10F calculates an MCS variation amount of the left sector 30C by the same processing as S104 to S105 in Fig. 5. The communication device 10F may change the communication sector to the left sector 30C by a predetermined angle and calculate an MCS variation amount of the left sector 30C at each angle.

The communication device 10F may first execute S203 and S204, and then execute S201 and S202.

In S205, the communication device 10F determines whether the MCS variation amount of the right sector 30B calculated in S202 is greater than the MCS variation amount of the left sector 30C calculated in S204. In processing of S201 to S204, when MCS variation amounts of a plurality of right sectors 30B having different angles and MCS variation amounts of a plurality of left sectors 30C having different angles are calculated, the communication device 10F may perform the determination in S205 by comparing largest MCS variation amounts. Alternatively, in this case, the communication device 10F may perform the determination in S205 by comparing an average of the MCS variation amounts of the plurality of right sectors 30B having different angles with an average of the MCS variation amounts of the plurality of left sectors 30C having different angles.

When it is determined that the MCS variation amount of the right sector 30B is greater than the MCS variation amount of the left sector 30C (S205: YES), in S206, the communication device 10F determines the communication sector as the left sector 30C, and ends the present processing.

When it is determined that the MCS variation amount of the right sector 30B is equal to or less than the MCS variation amount of the left sector 30C (S205: NO), in S207, the communication device 10F determines the communication sector as the right sector 30B, and ends the present processing.

In S205, the communication device 10F may determine whether the MCS variation amount of the left sector 30C calculated in S204 is greater than the MCS variation amount of the right sector 30B calculated in S202. In this case, when it is determined that the MCS variation amount of the left sector 30C is greater than the MCS variation amount of the right sector 30B (S205: YES), in S206, the communication device 10F may determine the communication sector as the right sector 30B, and end the present processing. In addition, when it is determined that the MCS variation amount of the left sector 30C is equal to or less than the MCS variation amount of the right sector 30B (S205: NO), in S207, the communication device 10F may determine the communication sector as the left sector 30C, and end the present processing.

In processing after S206 and S207, it may be determined whether the variation amount is equal to or less than a predetermined value, and when the variation amount is not equal to or less than the predetermined value, the communication sector determined in S206 or S207 may be treated as the communication sector in S201, and processing of S201 and subsequent steps may be performed in a loop manner again.

According to the processing shown in Figs. 5 and 6, at the time of the installation of the communication device 10F, it is possible to determine whether overreach interference occurs in the communication device 10F. In addition, when the overreach interference occurs, it is possible to reduce an impact of the overreach interference on the wireless communication between the communication device 10F and the communication device 10E.

<Modification>

Although a case where the communication device 10F receives the MCS value from the communication device 10E has been described above, the communication device 10F may determine an MCS value by itself based on a situation of the wireless communication with the communication device 10E and measure the MCS value for a certain period.

(Summary of Present Disclosure)

The present disclosure may be expressed as follows.

<Expression 1>

A communication system (1) for performing wireless communication between a first communication device (10F) and a second communication device (10E), in which the first communication device is configured to measure, for a certain period, an index (an MCS value) indicating at least one of a modulation method and a coding rate used for wireless communication with the second communication device, calculate a variation amount (an MCS variation amount) of the index in the certain period based on the measured index, and determine, based on the variation amount of the index, a directivity of an antenna (11) configured to perform the wireless communication with the second communication device.

Accordingly, the first communication device can appropriately determine, based on the variation amount of the index, the directivity of the antenna that performs the wireless communication with the second communication device.

<Expression 2>

In the communication system according to Expression 1, the first communication device may determine to change the directivity of the antenna when the variation amount of the index is equal to or greater than a predetermined threshold value.

Accordingly, when the variation amount of the index is equal to or greater than the predetermined threshold value, that is, when overreach interference occurs, the first communication device can appropriately determine the directivity of the antenna that performs the wireless communication with the second communication device.

<Expression 3>

In the communication system according to Expression 2, when it is determined to change the directivity of the antenna, the first communication device may change the directivity of the antenna to a first angle (change to a right sector) and calculates a variation amount of the index at the first angle, change the directivity of the antenna to a second angle which is an angle opposite to the first angle (change to a left sector) and calculates a variation amount of the index at the second angle, compare the variation amount of the index at the first angle with the variation amount of the index at the second angle, and change the directivity of the antenna to a direction of the first angle or the second angle based on a result of the comparison.

Accordingly, by comparing the variation amount of the index when the directivity of the antenna is at the first angle with the variation amount of the index when the directivity of the antenna is at the second angle, the first communication device can determine which of the first angle and the second angle has a larger variation amount of the index. That is, the first communication device can determine in which direction, the first angle or the second angle, a transmission source of a wireless signal causing the overreach interference is present.

<Expression 4>

In the communication system according to Expression 3, the first communication device may change the directivity of the antenna to the direction of the second angle (the left sector) when the variation amount of the index at the first angle is greater than the variation amount of the index at the second angle.

Accordingly, the first communication device can change the directivity of the antenna to the direction of the second angle opposite to the direction of the first angle in which the transmission source of the wireless signal causing the overreach interference is present. Therefore, an impact of the overreach interference is reduced, and quality of the wireless communication between the first communication device and the second communication device is improved.

<Expression 5>

In the communication system according to Expression 3 or 4, the first communication device may change the directivity of the antenna to the direction of the first angle (the right sector) when the variation amount of the index at the first angle is equal to or less than the variation amount of the index at the second angle.

Accordingly, the first communication device can change the directivity of the antenna to the direction of the first angle opposite to the direction of the second angle in which the transmission source of the wireless signal causing the overreach interference is present. Therefore, an impact of the overreach interference is reduced, and quality of the wireless communication between the first communication device and the second communication device is improved.

<Expression 6>

In the communication system according to any one of Expressions 1 to 5, the first communication device may measure a distance with the second communication device, specify an expected index (an MCS expected value) that is the index expected at the measured distance, and calculate the variation amount of the index with reference to the specified expected index.

Accordingly, the first communication device can calculate the variation amount of the index in the certain period.

<Expression 7>

In the communication system according to any one of Expressions 1 to 5, the first communication device may calculate, as the variation amount of the index, a difference between a maximum value and a minimum value of a plurality of the indexes measured in the certain period.

Accordingly, the first communication device can calculate the variation amount of the index in the certain period.

Although the embodiment has been described above with reference to the accompanying drawings, the present disclosure is not limited to such an example. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, components in the embodiment described above may be combined freely in a range without deviating from the spirit of the invention.

The present application is based on Japanese Patent Application No. 2021-015669 filed on February 3, 2021, and the contents thereof are incorporated herein by reference.

INDUSTRIAL APPLICABILITY

The technique of the present disclosure is useful for improving quality of wireless communication.

REFERENCE SIGNS LIST

    1: communication system
10, 10A, 10B, 10C, 10D, 10E, 10F: communication device
11: antenna
12: wireless communication circuit
13: wired communication circuit
14: input circuit
15: output circuit
16: memory
17: processor
30A: reference sector
30B: right sector
30C: left sector


**Claims**

1. A communication system for performing wireless communication between a first communication device and a second communication device, wherein
the first communication device is configured to

    measure, for a certain period, an index indicating at least one of a modulation method and a coding rate used for wireless communication with the second communication device,
calculate a variation amount of the index in the certain period based on the measured index, and
determine, based on the variation amount of the index, a directivity of an antenna configured to perform the wireless communication with the second communication device.

2. The communication system according to claim 1, wherein
the first communication device determines to change the directivity of the antenna when the variation amount of the index is equal to or greater than a predetermined threshold value.

3. The communication system according to claim 2, wherein

    when it is determined to change the directivity of the antenna, the first communication device changes the directivity of the antenna to a first angle and calculates a variation amount of the index at the first angle,
changes the directivity of the antenna to a second angle which is an angle opposite to the first angle and calculates a variation amount of the index at the second angle,
compares the variation amount of the index at the first angle with the variation amount of the index at the second angle, and
changes the directivity of the antenna to a direction of the first angle or the second angle based on a result of the comparison.

4. The communication system according to claim 3, wherein
the first communication device changes the directivity of the antenna to the direction of the second angle when the variation amount of the index at the first angle is greater than the variation amount of the index at the second angle.

5. The communication system according to claim 3, wherein
the first communication device changes the directivity of the antenna to the direction of the first angle when the variation amount of the index at the first angle is equal to or less than the variation amount of the index at the second angle.

**6.** The communication system according to claim 1, wherein
the first communication device is configured to

measure a distance with the second communication device,
specify an expected index that is the index expected at the measured distance, and
calculate the variation amount of the index with reference to the specified expected index.

**7.** The communication system according to claim 1, wherein
the first communication device is configured to calculate, as the variation amount of the index, a difference between
a maximum value and a minimum value of a plurality of the indexes measured in the certain period.

**8.** A communication device for performing wireless communication with another communication device, the communication device comprising:

an antenna configured to perform wireless communication with the other communication device; and
a processor configured to measure, for a certain period, an index indicating at least one of a modulation method
and a coding rate used for the wireless communication with the other communication device, calculate a variation
amount of the index in the certain period based on the measured index, and determine a directivity of the antenna
based on the variation amount of the index.

**9.** A communication method for performing wireless communication between a first communication device and a
second communication device, the communication method comprising:

by the first communication device,
measuring, for a certain period, an index indicating at least one of a modulation method and a coding rate used
for wireless communication with the second communication device;
calculating a variation amount of the index in the certain period based on the measured index; and
determining, based on the variation amount of the index, a directivity of an antenna that performs the wireless
communication with the first communication device.

*FIG. 1*

1

10A COMMUNICATION DEVICE

CH2

10B COMMUNICATION DEVICE

10C COMMUNICATION DEVICE

CH3

OVERREACH INTERFERENCE

10D COMMUNICATION DEVICE

10E COMMUNICATION DEVICE

CH2

10F COMMUNICATION DEVICE

*FIG. 2*

COMMUNICATION DEVICE — 10

ANTENNA — 11

WIRELESS COMMUNICATION CIRCUIT — 12

WIRED COMMUNICATION CIRCUIT — 13

INPUT CIRCUIT — 14

OUTPUT CIRCUIT — 15

PROCESSOR — 17

MEMORY — 16

*FIG. 3A*

WIRELESS SIGNAL

*FIG. 3B*

INTERFERENCE SIGNAL

WIRELESS SIGNAL

*FIG. 3C*

WIRELESS SIGNAL

INTERFERENCE SIGNAL

# FIG. 4

MCS EXPECTED VALUE TABLE

| INTER-DEVICE DISTANCE | MCS EXPECTED VALUE |
|---|---|
| 10 | 12 |
| 20 | 12 |
| 30 | 12 |
| ... | ... |
| 200 | 4 |
| 210 | 3 |
| ... | ... |

## FIG. 5

```
                    ┌─────────────┐
                    │    START    │
                    └──────┬──────┘
                           │
S101 ──┐  ┌────────────────────────────────────────┐
       └──│      PERFORM TEST COMMUNICATION         │
          └────────────────────────────────────────┘
                           │
S102 ──┐  ┌────────────────────────────────────────┐
       └──│       DETECT INTER-DEVICE DISTANCE      │
          └────────────────────────────────────────┘
                           │
S103 ──┐  ┌────────────────────────────────────────┐
       └──│         SPECIFY MCS EXPECTED VALUE      │
          │  CORRESPONDING TO INTER-DEVICE DISTANCE │
          │  BY REFERRING TO MCS EXPECTED VALUE TABLE│
          └────────────────────────────────────────┘
                           │
S104 ──┐  ┌────────────────────────────────────────┐
       └──│     MEASURE MCS VALUE FOR CERTAIN PERIOD │
          └────────────────────────────────────────┘
                           │
S105 ──┐  ┌────────────────────────────────────────┐
       └──│       CALCULATE MCS VARIATION AMOUNT    │
          └────────────────────────────────────────┘
                           │
S106 ──┐  ◇────────────────────────────────────────◇   NO
       └──│  IS MCS VARIATION AMOUNT EQUAL TO OR    │────┐
          │    GREATER THAN THRESHOLD VALUE?        │    │
          ◇────────────────────────────────────────◇    │
                           │ YES                         │
S107 ──┐  ┌────────────────────────────────────────┐    │
       └──│     PERFORM SECTOR CHANGE PROCESSING    │    │
          └────────────────────────────────────────┘    │
                           │◄─────────────────────────────┘
                    ┌─────────────┐
                    │     END     │
                    └─────────────┘
```

## FIG. 6

```
          ┌─────────────────────────────────┐
          │     START COMMUNICATION         │
          │   SECTOR CHANGE PROCESSING      │
          └─────────────────────────────────┘
                          │
                          ▼
S201 ─┐  ┌──────────────────────────────────────────────┐
      └─ │   CHANGE COMMUNICATION SECTOR TO             │
         │   RIGHT SECTOR FOR MEASUREMENT               │
         └──────────────────────────────────────────────┘
                          │
                          ▼
S202 ─┐  ┌──────────────────────────────────────────────┐
      └─ │  CALCULATE MCS VARIATION AMOUNT OF RIGHT SECTOR │
         └──────────────────────────────────────────────┘
                          │
                          ▼
S203 ─┐  ┌──────────────────────────────────────────────┐
      └─ │   CHANGE COMMUNICATION SECTOR TO             │
         │   LEFT SECTOR FOR MEASUREMENT                │
         └──────────────────────────────────────────────┘
                          │
                          ▼
S204 ─┐  ┌──────────────────────────────────────────────┐
      └─ │  CALCULATE MCS VARIATION AMOUNT OF LEFT SECTOR │
         └──────────────────────────────────────────────┘
                          │
                          ▼
S205 ─┐  ╱────────────────────────────────────────────╲      NO
      └─ ⟨  MCS VARIATION AMOUNT OF RIGHT SECTOR >      ⟩─────┐
         ╲  MCS VARIATION AMOUNT OF LEFT SECTOR?        ╱     │
                          │                                    │
                         YES                                   │
                          ▼                                    ▼
S206 ─┐                               S207 ─┐
 ┌──────────────────────────┐          ┌──────────────────────────┐
 │  DETERMINE COMMUNICATION │          │  DETERMINE COMMUNICATION │
 │   SECTOR AS LEFT SECTOR  │          │  SECTOR AS RIGHT SECTOR  │
 └──────────────────────────┘          └──────────────────────────┘
                          │                    │
                          ▼◄───────────────────┘
                  ┌─────────────┐
                  │     END     │
                  └─────────────┘
```

17

## INTERNATIONAL SEARCH REPORT

| | International application No. |
|---|---|
| | **PCT/JP2021/030622** |

**A. CLASSIFICATION OF SUBJECT MATTER**

*H04W 16/28*(2009.01)i; *H04W 88/02*(2009.01)i
FI: H04W16/28; H04W88/02 140

According to International Patent Classification (IPC) or to both national classification and IPC

**B. FIELDS SEARCHED**

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2013-236301 A (OLYMPUS CORP) 21 November 2013 (2013-11-21) paragraphs [0026]-[0027], [0045]-[0053] | 1-9 |
| Y | JP 2015-528651 A (TELECOM ITALIA S.P.A) 28 September 2015 (2015-09-28) paragraphs [0053]-[0054] | 1-9 |
| Y | JP 2018-165099 A (PANASONIC IP MAN CORP) 25 October 2018 (2018-10-25) paragraphs [0182]-[0184], fig. 23 | 6 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 November 2021** | **16 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2021/030622**

| Patent document cited in search report | | | Publication date (day/month/year) | Patent family member(s) | | | Publication date (day/month/year) |
|---|---|---|---|---|---|---|---|
| JP | 2013-236301 | A | 21 November 2013 | US | 2015/0029056 | A1 | |
| | | | | paragraphs [0034]-[0035], [0057]-[0067] | | | |
| | | | | WO | 2013/168504 | A1 | |
| | | | | EP | 2849283 | A1 | |
| | | | | CN | 104272527 | A | |
| JP | 2015-528651 | A | 28 September 2015 | US | 2015/0208425 | A1 | |
| | | | | paragraphs [0059]-[0060] | | | |
| | | | | WO | 2014/023358 | A1 | |
| | | | | KR | 10-2015-0043394 | A | |
| | | | | CN | 104620648 | A | |
| JP | 2018-165099 | A | 25 October 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002010340 A
- JP 2021015669 A
- JP FEBRUARY32021 A